# EUROPÄISCHE PATENTSCHRIFT

(11) **EP 0 369 131 B1**
(45) Veröffentlichungstag und Bekanntmachung des Hinweises auf die Patenterteilung: **12.05.1993**
(21) Anmeldenummer: 89116819.7
(22) Anmeldetag: 12.09.1989
(51) Int. Cl.: F16J 15/32

(54) **Radialwellendichtring**
Rotory shaft seal
Bagues à lèvres radiales

(30) Priorität: 18.11.1988 DE 3838996
(43) Veröffentlichungstag der Anmeldung: 23.05.1990
(73) Patentinhaber: Firma Carl Freudenberg, 69469 Weinheim (DE)
(72) Erfinder: Vogt, Rolf, D-6836 Oftersheim (DE); Winkenbach, Roland, D-6914 Rauenberg (DE); Kilthau, Gerhard, Dr., D-6800 Mannheim 51 (DE)

(56) Entgegenhaltungen:
- DE-A- 1 525 882
- FR-A- 2 188 760
- US-A- 3 785 660

## Beschreibung

Die Erfindung betrifft einen Radialwellendichtring nach dem Oberbegriff von Anspruch 1.

Ein solcher Radialwellendichtring ist aus der US-A-37 85 660 bekannt. Die damit erzielte Gebrauchsdauer ist noch wenig befriedigend.

Der Erfindung liegt die Aufgabe zugrunde, einen solchen Radialwellendichtring derart weiterzuentwickeln, daß sich eine verbesserte Gebrauchsdauer ergibt.

Dieser Aufgabe wird erfindungsgemäß mit den kennzeichnenden Merkmalen von Anspruch 1 gelöst.

Auf vorteilhafte Ausgestaltungen nehmen die Unteransprüche Bezug.

Bei dem erfindungsgemäßen Radialwellendichtring ist zwischen der ersten Kegelfläche und der Dichtkante eine im wesentlichen kreisringförmig gestaltete Zwischenfläche vorgesehen, die der Dichtungsachse unter einem Winkel von etwa go Grad zugeordnet ist, wobei die Zwischenfläche in radialer Richtung eine Breite C hat, die mit der größten radialen Erstreckung D der zweiten Kegelfläche im wesentlichen übereinstimmt. Die Zwischenfläche weist in Richtung des abzudichtenden Raumes, die zweite Kegelfläche in Richtung der Außenluft. Beide schneiden einander in der Dichtkante, auf welche zusätzlich die in gleichmäßigen Umfangsabständen verteilten hydrodynamischen Rückförderelemente treffen. Sowohl die Zwischenfläche als auch die zweite Kegelfläche haben in radialer Richtung nur eine sehr geringe Erstreckung, welche regelmäßig weniger als 1 mm beträgt. Der Wert bezeichnet zugleich die radiale Erstreckung des Profils der hydrodynamisch wirkenden Rückförderelemente, welche im allgemeinen auf der radial nach innen weisenden Seite ebenfalls von einer die Dichtungsachse umschließenden, gedachten Kegelfläche begrenzt sind. Diese kann sich vollkommen parallel zu der dritten Kegelfläche erstrecken, und sie durchschneidet in jedem Falle zugleich die Dichtkante.

Die Dichtlippe ist einstückig aus gummielastischem Werkstoff erzeugt und wird im allgemeinen während ihrer Formgebung und Verfestigung mit dem Versteifungsring verbunden. Dieser kann aus metallischem Werkstoff oder Kunststoff bestehen.

Die Dichtlippe des erfindungsgemäßen Radialwellendichtringes weist im Bereich ihrer die Oberfläche der abzudichtenden Welle berührenden Zone, d.h. im Bereich der Dichtkante, ein sehr schlankes Profil auf. Die elastische Nachgiebigkeit der Dichtlippe in axialer Richtung ist dadurch im Bereich der Dichtkante verbessert, wodurch Leckflüssigkeit in einer vergleichsweise besseren Weise zurück in den abgedichtenden Raum gefördert werden kann als bei den bisherigen Ausführungen. Das insgesamt erzielte Abdichtungsergebnis erfährt dadurch eine deutliche Verbesserung.

Die Dichtkante ist auf der dem abzudichtenden Raum zugewandten Seite durch die sich im wesentlichen in radialer Richtung erstreckenden Zwischenfläche begrenzt. Die in dem abzudichtenden Raum enthaltene Flüssigkeit, bei der es sich zumeist um ein Schmieröl handelt, vermag dadurch die Dichtkante bei sich drehender Welle in besserer Weise zu erreichen als bei den bisherigen Ausführungen und dementsprechend in besserer Weise zu kühlen. Sowohl das in diesen Bereich gelangende Schmieröl als auch der die Dichtkante bildende, gummielastische Werkstoff sind dadurch in besserer Weise vor Überhitzungen geschützt. Sowohl die Gefahr des Auftretens einer Werkstoffversprödung der Dichtlippe als auch die Gefahr der Entstehung von Anlagerungserscheinungen aus Ölkohle an dem Lippenring oder der Oberfläche der abzudichtenden Welle ist dadurch deutlich vermindert.

Die Dichtkante berührt auch bei dem erfindungsgemäßen Radialwellendichtring die Oberfläche der abzudichtenden Welle unter einer elastischen Anpressung. Sie besteht selbst aus elastisch deformierbarem Werkstoff, was zur Folge hat, daß sich in Folge der Anpressung eine Aufweitung der bei der Herstellung an den Lippenring angeformten Dichtkante zu einer Dichtfläche geringer axialer Breite ergibt. Diese hat bei sich drehender auf Welle eine Laufspurbreite entsprechender Ausdehnung zur Folge, wobei die Ausdehnung wegen der schlanken Gestaltung des Profils der Dichtlippe im Bereich der Dichtkante allerdings während der gesamten Gebrauchsdauer des Dichtringes nur eine sehr geringfügige Veränderung erfährt. Für die Erzielung eines während der gesamten Gebrauchsdauer gleichmäßigen Abdichtungsergebnisses ist das von erheblichem Vorteil und die für die Abdichtung erforderliche, spezifische Flächenpressung läßt sich mit vergleichsweise kleiner dimensionierten Andrückfedern erreichen.

Bedingt durch die geringe axiale Erstreckung der Laufspurbreite ist die Gefahr eines Festsetzens von Fremdkörpern zwischen der Dichtkante und der Oberfläche der abzudichtenden Welle bei der erfindungsgemäßen Ausführung deutlich vermindert. Fremdkörper können daher auch nicht mehr in ähnlichem Umfange wie bisher zum vorzeitigen Ausfall des Dichtringes führen.

Die Dichtlippe kann im Bereich der Dichtkante ein Profil haben, welches mit dem Profil der hydrodynamischen wirksamen Rückförderelementen im wesentlichen übereinstimmt. Es resultiert in diesem Falle in Umfangsrichtung eine weitgehend ausgeglichene Anpressung der Dichtkante an die Oberfläche der abzudichtenden Welle. Hinsichtlich der Erzielung eines guten statischen Abdichtungsergebnisses bei nichtdrehender Welle ist das von ebenso großem Vorteil wie hinsichtlich der Erzielung eines auf dem Gesamtumfang ausgeglichenen Verschleißbildes. Das gute Abdichtungsergebnis des neuwertigen Radialwellendichtringes bleibt dadurch über besonders lange Zeiträume nahezu unverändert erhalten.

Durch die im wesentlichen radiale Anordnung der Zwischenfläche können bei drehender Welle nur unwesentliche Radialkräfte von dem abzudichtenden Medium auf den Lippenring ausgeübt werden. Die für die Erzielung eines guten Abdichtungsergebnisses erforderliche Anpressung der Dichtkante an die Oberfläche der abzudichtenden Welle läßt sich dadurch problemlos auf einen optimalen Wert einstellen. Dieser bleibt weitgehend unabhängig von der jeweiligen Drehzahl der abzudichtenden Welle im wesentlichen stets erhalten, wodurch sich nicht nur ein ausgezeichnetes Abdichtungsergebnis über lange Zeiträume gewährleisten läßt sondern zugleich eine Minimierung des sich während der Gebrauchsdauer ergebenden Verschleißes. Zugleich ist die Walkbeanspruchung des sich in der unmittelbaren Nachbarschaft der Dichtkante befindenden, abzudichtenden Mediums deutlich reduziert und damit die Wärmeentwicklung in demselben. Für die Gewährleistung einer gleichbleibenden Schmierung mit Kühlung der dynamischen Abdichtungszone unter normalen Betriebsbedingungen ist das von großem Vorteil.

Das Profil des Lippenringes kann bei dem erfindungsgemäßen Radialwellendichtring, bedingt durch die geringe radiale Ausdehnung der Zwischenfläche, ansonsten ähnlich gestaltet sein wie bei den bisherigen Ausführungen und es besteht daher die Möglichkeit, evtl. benötigte Andrückfedern aus metallischen Werkstoffen in ähnlicher Weise auszubilden und anzuordnen wie bisher. Für die Gewährleistung eines gleichbleibenden Abdichtungsergebnisses über lange Zeiträume ist das von Vorteil.

Die zweite Kegelfläche soll mit der Dichtungsachse einen Kegelwinkel einschließen, der zwischen 30 und 60 Grad liegt, zweckmäßig zwischen 40 und 50 Grad Insbesondere in dem zuletzt angegebenen Bereich ist eine gute Rückforderung von Leckflüssigkeit in den abzudichtenden Raum ebenso gewährleistet wie die Erzielung einer ausreichenden mechanischen Widerstandsfähigkeit der Dichtlippe im Bereich der Dichtkante in Bezug auf unverwünschte Deformierungen.

Die Zwischenfläche soll mit der Dichtungsachse des Radialwellendichtringes in eingebautem Zustand einen Winkel von etwa 90 Grad einschließen. Geringfügige Abweichungen von ± 10 Grad können problemlos zugelassen werden.

Die Zwischenfläche muß, unabhängig von dem Durchmesser der abzudichtenden Welle eine Erstreckung in radialer Richtung haben, die 0,05 bis 1 mm beträgt. Bevorzugt wird eine radiale Breite von 0,1 bis 0,5 mm, insbesondere eine solche von 0,15 bis 0,3 mm.

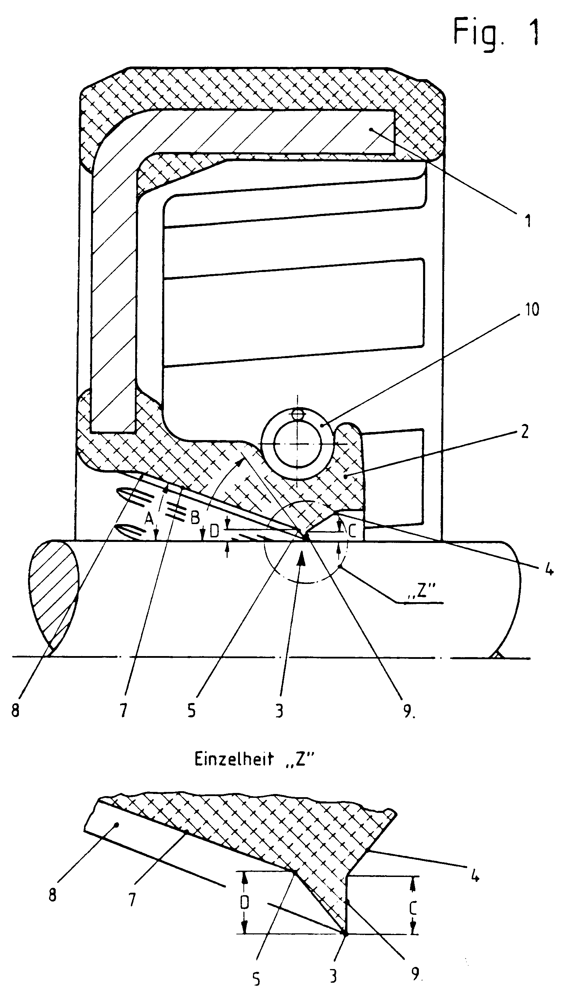

Der Gegenstand der Erfindung wird nachfolgend anhand der beigefügten Zeichnung weiter verdeutlicht. Es zeigen:
Figur 1
   Einen Radialwellendichtring der erfindungsgemäßen Art in eingebautem Zustand und in einer halbgeschnittenen Darstellung.
Figur 2
   Einen Ausschnitt aus der Innenseite des in Figur 1 gezeigten Radialwellendichtringes.
Figur 3 und Figur 4
   Ausschnitte aus der Innenseite von Radialwellendichtringen, die unabhängig von der Drehrichtung der Welle wirksam sind.

Der in Figur 1 gezeigte Radialwellendichtring entspricht in seinen äußeren Abmessungen den Ausführungen, welche insbesondere bei der Abdichtung von Kurbelwellen und anderen sich in einer Richtung drehenden Maschinenteilen zur Anwendung gelangen. Er besteht aus dem Versteifungsring 1 aus Stahlblech und dem an dessen Innenseite anvulkanisierten Lippenring 2 aus Gummi.

Letzterer ist mit der Dichtkante 3 versehen und in dem radial außerhalb der Dichtkante 3 liegenden Bereich mit einer umlaufenden Nute, in welche die Ringwendelfeder 10 aus metallischem Werkstoff eingefügt ist. Diese steht in eingebautem Zustand des Radialwellendichtringes unter einer Zugspannung und bewirkt eine radiale Anpressung der Dichtkante 3 an die Oberfläche der abzudichtenden Welle.

Die Dichtkante 3 wird gebildet durch die Schnittkante zwischen der zweiten Kegelfläche 5 und der sich im eingebauten Zustand des Radialwellendichtringes im wesentlichen senkrecht zur Dichtungsachse 12 erstreckenden Zwischenfläche 9. Die Zwischenfläche 9 hat die radiale Erstreckung C, die zweite Kegelfläche 5 die radiale Erstreckung D. Beide Werte sind im wesentlichen übereinstimmend und betragen bei den gezeigten Ausführungsbeispiel, welches bezug nimmt auf die Abdichtung einer Kurbelwelle mit einem Durchmesser von 80 mm 0,2 mm. Eine gegenseitige Abweichung der Werte C und D um ± 20 % ist ohne weiteres zulässig.

Die zweite Kegelfläche 5 schließt mit der Zwischenfläche 9 einen Winkel von etwa 45 Grad ein.

Radial außerhalb schließt sich an die Zwischenfläche 9 die erste Kegelfläche 4 an, an die zweite Kegelfläche 5 die dritte Kegelfläche 7. Der Winkel zwischen der ersten Kegelfläche 4 und der Dichtungsachse 12 beträgt bei dem gezeigten Ausführungsbeispiel 50 Grad, derjenige A zwischen der dritten Kegelfläche 7 und der Dichtungsachse 12 Grad.

Die zweite Kegelfläche 5 und die dritte Kegelfläche 7 sind der Außenluft zugewandt, die Zwischenfläche 9 und die erste Kegelfläche 4 dem abzudichtenden Raum.

Auf den der Außenluft zugewandten Kegelflächen 5 und 7 sind in Umfangsrichtung gleichmäßig verteilte, in radialer Richtung nach innen vorspringende, hydrodynamische Rückförderelemente 8 vorgesehen. Diese sind rippenähnlich gestaltet und schließen in Umfangsrichtung mit der Dichtungsachse 12 einen Winkel von etwa 30 Grad ein. Die Neigungsrichtung ist so gewählt, daß der Welle anhaftende Leckflüssigkeit zurück in den abgedichteten Raum gefördert wird. Das Profil der Rückförderelemente 8 entspricht weitgehend demjenigen, welches die Dichtlippe zwischen der Zwischenfläche 9 und der zweiten Kegelfläche 5 aufweist. Die hydrodynamischen Rückförderelemente 8 werden innenseitig von einer gedachten Kegelfläche begrenzt, welche sich parallel zu der dritten Kegelfläche 7 erstreckt und die Dichtkante 3 schneidet.

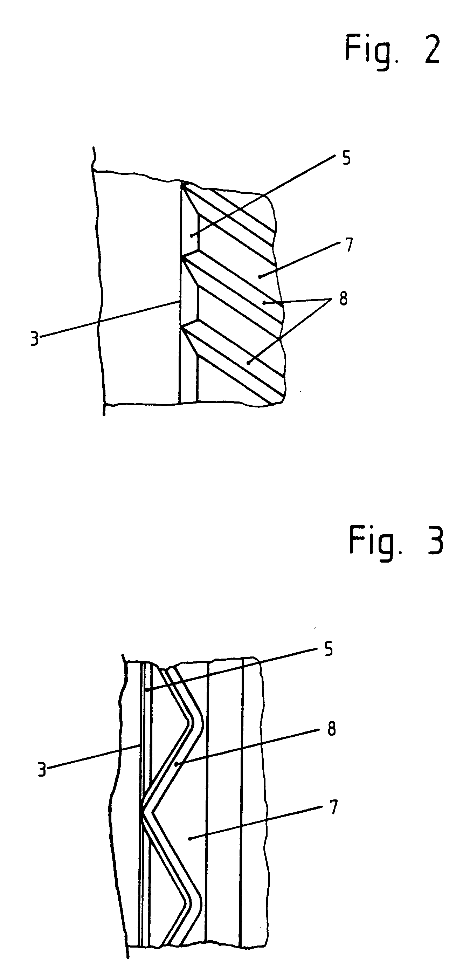

In Figur 2 wird die Innenseite des vorstehend beschriebenen Radialwellendichtringes nach Figur 1 in einer Draufsicht auf die Innenseite gezeigt. Es ist zu ersehen, daß die Dichtkante 3, welche durch zwei einander schneidenden Flächen gebildet wird, als durchgehendes Band gestaltet ist und daß die hydrodynamischen Rückförderelemente 8 auf ihrer Innenseite ebenfalls von Kanten begrenzt sind, welche durch zwei einander schneidende Flächen gebildet sind. Diese Kanten erstrecken sich bis zu der Dichtkante 3, wodurch Leckflüssigkeit zuverlässig über die Dichtkante 3 hinweg zurück in den abgedichtenden Raum gefördert wird. Im Bereich der gegenseitigen Berührungszonen zwischen den vorstehend angesprochen Kanten der hydrodynamischen Rückförderelemente 8 und der Dichtkante 3 ergibt sich nur eine sehr geringfügige Materialzusammenballung. Die spezifische Anpressung der Dichtkante 3 an die Oberfläche der abzudichtenden Welle ist dadurch nahezu an jeder Umfangsstelle von übereinstimmender Größe. Für die Erzielung eines guten Abdichtungsergebnisses über lange Zeiträume ist das von großem Vorteil.

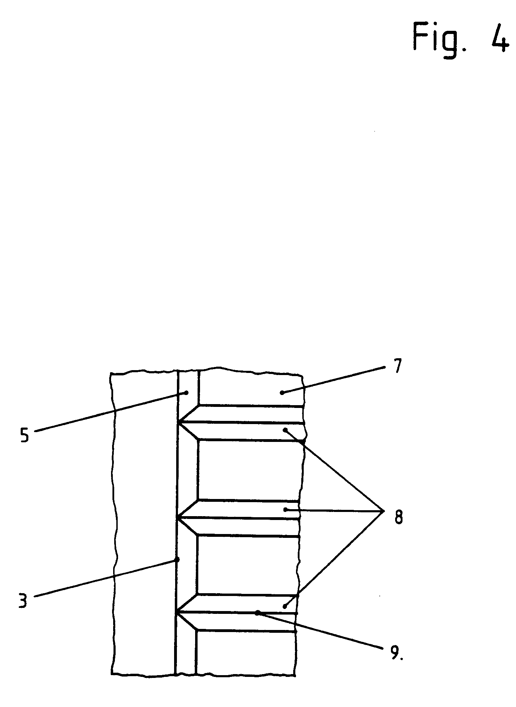

In den Figuren 3 und 4 werden Draufsichten auf die Innenseiten von zwei verschiedenen Lippenringen gezeigt, welche unabhängig von der Drehrichtung der abzudichtenden Welle eine gute Wirksamkeit haben.

Bei der Ausführung nach Figur 3 ist nur ein einziges, hydrodynamisch wirkendes Rückförderelement 8 vorhanden, welches die abzudichtende Welle auf ihrem gesamten Umfang umschließt und welches einen S - bzw. Z-fömigen Verlauf hat. Unabhängig von der Drehrichtung der abzudichtenden Welle stehen dadurch stets Umfangsbereiche des Rückförderelementes 8 zur Verfügung, welche auf die der Welle anhaftendene Leckflüssigkeit eine axial in den abzudichtenden Raum weisende Förderwirkung auszuüben vermögen. Das Rückförderelement 8 hat ein dreieckiges Profil mit einer nach innen weisenden Schnittkante, die die Dichtkante 3 in regelmäßig verteilten Umfangsabständen berührt.

Die in Figur 4 gezeigte Ausführung ist der vorstehend beschriebenen in funktioneller Hinsicht ähnlich. Es sind in diesem Falle jedoch mehrere hydrodynamisch wirksame Rückförderelemente 8 vorhanden, welche in einer achsparallelen Erstreckung erzeugt und innenseitig von einer Schnittkante begrenzt sind, die sich bis zu der Dichtkante 3 erstreckt. Die Rückförderelemente 8 haben ein dreieckiges Profil, welches ähnlich schlank dimensioniert ist wie dasjenige der einander in der Dichtkante 3 durchschneidenden Flächen. Hierdurch sowie durch die große elastische Nachgiebigkeit des zur Herstellung des Lippenringes verwendeten gummielastischen Werkstoffes ergibt sich bei drehender Welle eine umfangsgerichtete Deformierung der die abzudichtende Welle berührenden Teile des Lippenringes, bezogen auf die übrigen Teile. Die elastische Deformierung ist in bezug auf die Wirksamkeit der Dichtkante 3 ohne weitere Bedeutung, sie bedingt indessen eine soweitgehende Auslenkung der der Dichtkante 3 benachbarten Teile der Rückförderelemente 8 in bezug auf die herstellungsbedingte, achsparallele Gestalt der Rückförderelemente, daß diese eine geneigte Zuordnung zur Achse der abzudichtenden Welle einnehmen und eine Rückförderwirkung auf Leckflüssigkeit auszuüben vermögen.

Die Richtung der Deformierung ist abhängig von der Drehrichtung der abzudichtenden Welle und der aus ihr resultierende Rückfördereffekt ist dadurch auch in Fällen verfügbar, in denen die Welle während des normalen Gebrauchs der Dichtung eine wechselende Drehrichtung aufweist.

## Patentansprüche

1. Radialwellendichtring, bestehend aus einem Versteifungsring (1) und einem daran festgelegten Lippenring (2) aus gummielastischem Werkstoff, bei dem der Lippenring mit einer Dichtkante (3) versehen ist sowie mit einer in Richtung der Dichtkante, konvergierenden ersten und zweiten Kegelfläche (4,5), wobei die der Außenluft zugewandte zweite Kegelfläche (5) auf der von der Dichtkante (3) abgewandten Seite durch eine dritte Kegelfläche (7) begrenzt ist, die einen kleineren Winkel A mit der Dichtungsachse einschließt als die zweite Kegelfläche (5) und wobei im Bereich der zweiten (5) und der dritten Kegelfläche (7) radial nach innen vorspringende, gleichmäßig in Umfangsrichtung verteilte hydrodynamisch wirkende Rückförderelemente (8) für Leckflüssigkeit vorgesehen sind, die sich bis zu der Dichtkante (3) erstrecken, dadurch gekennzeichnet, daß zwischen der ersten Kegelfläche (4) und der Dichtkante (3) eine im wesentlichen kreisringförmig gestaltete Zwischenfläche (9) vorgesehen ist, die der Dichtungsachse unter einem Winkel von etwa 90 Grad zugeordnet ist und daß die Zwischenfläche (9) in radialer Richtung eine Breite (C) hat, die mit der größten radialen Erstreckung (D) der zweiten Kegelfläche (5) im wesentlichen übereinstimmt.

2. Radialwellendichtring nach Anspruch 1, dadurch gekennzeichnet, daß die zweite Kegelfläche (5) mit der Dichtungsachse einen Winkel einschließt, der 30 bis 60 Grad beträgt.

3. Radialwellendichtring nach Anspruch 1, dadurch gekennzeichnet, daß die zweite Kegelfläche (5) mit der Dichtungsache einen Winkel einschließt, der etwa 40 bis 50 Grad beträgt.

4. Radialwellendichtring nach Anspruch 1 - 3, dadurch gekennzeichnet, daß die Zwischenfläche (9) eine radiale Breite von 0,05 bis 1,0 mm hat.

5. Radialwellendichtring nach Anspruch 1 - 3, dadurch gekennzeichnet, daß die Zwischenfläche (9) eine radiale Breite von 0,1 bis 0,5 mm hat.

6. Radialwellendichtring nach Anspruch 1 - 3, dadurch gekennzeichnet, daß die Zwischenfläche (9) eine radiale Breite von 0,15 bis 0,3 mm hat.

## Claims

1. A radial shaft seal, composed of a reinforcing ring (1) and a lip ring (2) which is fixed thereto and is made of rubber-elastic material, in which seal the lip ring is provided with a sealing edge (3) and with a first and second conical surface (4,5) converging in the direction of the sealing edge, the second conical surface (5) facing the outside air being bounded on the side facing away from the sealing edge (3) by a third conical surface (7) which encloses a smaller angle A with the sealing axis than the second conical surface (5), and hydrodynamically acting returning elements (8) for leaked fluid being provided in the region of the second conical surface (5) and of the third conical surface (7), which returning elements project radially inwards, are distributed evenly in the circumferential direction and extend up to the sealing edge (3), characterised in that an intermediate surface (9) of substantially circular shape, which is arranged at an angle of about 90 degrees to the sealing axis, is provided between the first conical surface (4) and the sealing edge (3), and in that the intermediate surface (9) has a width (C) in the radial direction which corresponds substantially to the largest radial extension (D) of the second conical surface (5).

2. A radial shaft seal according to claim 1, characterised in that the second conical surface (5) encloses an angle of 30 to 60 degrees with the sealing axis.

3. A radial shaft seal according to claim 1, characterised in that the second conical surface (5) encloses an angle of about 40 to 50 degrees with the sealing axis.

4. A radial shaft seal according to any of claims 1 to 3, characterised in that the intermediate surface (9) has a radial width of 0.05 to 1.0 mm.

5. A radial shaft seal according to any of claims 1 to 3, characterised in that the intermediate surface (9) has a radial width of 0.1 to 0.5 mm.

6. A radial shaft seal according to any of claims 1 to 3, characterised in that the intermediate surface (9) has a radial width of 0.15 to 0.3 mm.

## Revendications

1. Bague d'étanchéité radiale pour arbres, se composant d'un anneau de renforcement (1) et d'un anneau à lèvres (2), fixé sur lui et constitué d'un matériau ayant l'élasticité du caoutchouc, cet anneau à lèvres étant pourvu d'un bord d'étanchéité (3) ainsi que d'une première et d'une seconde surface conique (4, 5), convergeant en direction du bord d'étanchéité, la seconde surface conique (5), dirigée vers l'air extérieur, étant délimitée sur le côté opposé au bord d'étanchéité (3) par une troisième surface conique (7), qui fait avec l'axe de bague un plus petit angle A que la seconde surface conique (5), et il est prévu dans une zone de la seconde (5) et de la troisième (7) surface conique des éléments de refoulement (8) du liquide de fuite, à action hydrodynamique, faisant saillie radialement vers l'intérieur, répartis uniformément dans une direction circonférentielle et qui s'étendent jusqu'au bord d' étanchéité (3), caractérisée en ce qu il est prévu entre la première surface conique (4) et le bord d'étanchéité (3) une surface intermédiaire (9) agencée dans l'essentiel avec une forme annulaire et qui fait avec l'axe de bague un angle d'environ 90 degrés et en ce que la surface intermédiaire (9) a dans une direction radiale une largeur (C) qui correspond dans l'essentiel à la plus grande dimension radiale (D) de la seconde surface conique (5).

2. Bague d'étanchéité radiale pour arbres selon la revendication 1, caractérisée en ce que la seconde surface conique (5) fait avec l'axe de bague un angle qui est compris entre 30 et 60 degrés.

3. Bague d'étanchéité radiale pour arbres selon la revendication 1, caractérisée en ce que la seconde surface conique (5) fait avec l'axe de bague un angle qui est compris entre environ 40 et 50 degrés.

4. Bague d'étanchéité radiale pour arbres selon une des revendications 1 à 3, caractérisée en ce que la surface intermédiaire (9) a une largeur radiale de 0,5 à 1,0 mm.

5. Bague d'étanchéité radiale pour arbres selon une des revendications 1 à 3, caractérisée en ce que la surface intermédiaire (9) a une largeur radiale de 0,1 à 0,5 mm.

6. Bague d'étanchéité radiale pour arbres selon une des revendications 1 à 3, caractérisée en ce que la surface intermédiaire (9) a une largeur radiale de 0,15 à 0,3 mm.
